(19) Europäisches Patentamt
European Patent Office
Office européen des brevets

(11) **EP 1 403 655 B1**

(12) **EUROPÄISCHE PATENTSCHRIFT**

(45) Veröffentlichungstag und Bekanntmachung des Hinweises auf die Patenterteilung:
**18.04.2007 Patentblatt 2007/16**

(51) Int Cl.:
***G01S 5/14*** *(2006.01)*

(21) Anmeldenummer: **03020031.5**

(22) Anmeldetag: **04.09.2003**

(54) **Verfahren und Anordnung zur Ermittlung von geschätzten Navigationssignal-Fehlerinformationen**

Method and device for determining estimated error information of a navigation signal

Méthode et dispositif pour la détermination d'informations d'erreur estimées d'un signal de navigation

(84) Benannte Vertragsstaaten:
**BE DE FR GB IT NL**

(30) Priorität: **30.09.2002 DE 10245967**

(43) Veröffentlichungstag der Anmeldung:
**31.03.2004 Patentblatt 2004/14**

(73) Patentinhaber: **EADS Astrium GmbH**
**81663 München (DE)**

(72) Erfinder: **Trautenberg, Hans Ludwig, Dr.**
**92318 Neumarkt (DE)**

(74) Vertreter: **Ulrich, Thomas**
**c/o EADS Deutschland GmbH,**
**Patentabteilung**
**81663 München (DE)**

(56) Entgegenhaltungen:
**US-A- 6 040 798        US-B1- 6 323 803**
**US-B1- 6 324 474**

**Beschreibung**

Die vorliegende Erfindung betrifft die Problematik der Ermittlung von geschätzten Navigationssignal-Fehlerinformationen, wobei mehrere Empfangseinrichtungen Navigationssignale mindestens einer Navigationssignal-Sendeeinrichtung empfangen und mindestens eine Auswerte-Einrichtung die empfangenen Navigationssignale auswertet. Die Navigationssignal-Fehlerinformationen werden letztlich direkt oder indirekt an Teilnehmer-Endgeräte eines Funk-Navigationssystems übertragen, damit die Teilnehmer-Endgeräte aufgrund der Fehlerinformationen beispielsweise über die Genauigkeit von Messungen, die aufgrund von empfangenen Navigationssignalen durchgeführt wurden, informiert sind. Ein Funk-Navigationssystem kann beispielsweise mit Hilfe von terrestrischen Navigationssignal-Sendeeinrichtungen oder mit Hilfe von Navigationssatelliten oder anderen Flugkörpern als Navigationssignal-Sendeeinrichtungen realisiert werden.

Aus dem Stand der Technik sind bereits solche Maßnahmen grundsätzlich bekannt, wie beispielsweise aus US 6,114,992 ersichtlich wird. Um Navigationssignal-Fehlerinformationen zu ermitteln, wird nach den Maßnahmen aus dem Stand der Technik jeweils ein bestimmtes Fehlermodell herangezogen, welches auf empfangene Navigationssignale angewendet wird. Dies soll am Beispiel von Satelliten-Navigationssystemen kurz erläutert werden. Zum entsprechenden Stand der Technik wird beispielhaft auf die bereits genannte US 6 114 992 verwiesen sowie auf S. P. Pullen et al., "Global Optimisation of GPS Augmentation Architectures using Genetic Algorithms", ION GPS-95, Palm Springs, California, September 1995, im Internet abrufbar unter:

http://einstein.stanford.edu/gps/PDF/global_optimize_spp95.pdf

und auf W. Werner, "Towards Global Integrity", International Symposium on Kinematic Systems in Geodesy, Geomatics and Navigation, KIS 2001, June 5-8, 2001, Banff, Canada, im Internet abrufbar unter:

http://www.ifen.com/publications/KIS2001_Paper.pdf

Aus der US 6,324,474 ist ein Verfahren zur Ermittlung von geschätzten Navigationssignal-Fehlerinformationen gemäss dem Oberbegriff des Anspruchs 1 bekannt.

Bei Satelliten-Navigationssystemen können grundsätzlich sowohl Positionsfehler der Satellitenposition als auch Uhrfehler der Satellitenuhren auftreten. Bisher wird beim Stand der Technik die maximale Projektion des Positions- und Uhrenfehlers der einzelnen Signale im Einsatzgebiet des Navigationssystems entweder modelliert als eine skalare lineare Funktion der Länge und Breite, als eine skalare lineare Funktion des Nord- und Ostwerts in einem ebenen Bezugssystem, in welchem sich die Signalquelle genau normal über dem Ursprung des Bezugssystem befindet, als maximale Projektion des vierdimensionalen Positions- und Uhrenfehler oder als maximale Projektion eines dreidimensionalen Fehlers, wobei die ersten beiden Komponenten den Fehler in Nord- bzw. Ostrichtung und die dritte Komponente den Uhr- oder Höhenfehler darstellen. Diese dritte Komponente bekommt also entweder einen räumlichen oder einen zeitlichen Charakter, der einmal für den Algorithmus zur Ermittlung der Navigationssignal-Fehlerinformationen festgelegt wird. Diese skalare Schätzung hat den Nachteil, dass sie für große Versorgungsgebiete nicht funktioniert, die vierdimensionale Schätzung hat den Nachteil, dass deutlich mehr Beobachtungen als für die dreidimensionale Schätzung notwendig sind. Die bisher vorgeschlagenen dreidimensionalen Schätzungen haben den Nachteil, dass die Festlegung der Art der dritten Komponente a priori erfolgen muss, sich aber der optimale Charakter der dritten Komponente mit der Zeit und der Benutzerposition ändert. Die Schätzung als skalare lineare Funktion des Nord- und Ostwerts hat den Nachteil, dass sie häufig eine schlechtere Fehlerbeschreibung liefert als die beiden dreidimensionalen Verfahren.

Aufgabe der vorliegenden Erfindung ist es, Möglichkeiten zur Ermittlung geschätzter Navigationssignal-Fehlerinformationen für Navigationssignale mindestens einer Navigationssignal-Sendeeinrichtung bereitzustellen, die mit einer sehr kurzen Beobachtungszeit und mit möglichst wenig Empfangseinrichtungen realisiert werden können. Diese Aufgabe wird gelöst durch die Merkmale der Ansprüche 1, 12, 15 und 16.

Ein erster Gegenstand der vorliegenden Erfindung ist ein Verfahren zur Ermittlung von geschätzten Navigationssignal-Fehlerinformationen, wobei mehrere Empfangseinrichtungen Navigationssignale mindestens einer Navigationssignal-Sendeeinrichtung empfangen und mindestens eine Auswerte-Einrichtung die empfangenen Navigationssignale auswertet. Weiterhin erfolgt bei diesem Verfahren eine - direkte oder indirekte - Übertragung von Navigationssignal-Fehlerinformationen an Teilnehmer-Endgeräte eines Funk-Navigationssystems. Eine indirekte Übertragung kann z. B. dadurch erfolgen, dass Navigationssignal-Fehlerinformationen zunächst an andere Einrichtungen - innerhalb oder außerhalb des Funk-Navigationssystems - übermittelt werden.

Das erfindungsgemäße Verfahren zeichnet sich nun dadurch aus, dass

- von der Auswerte-Einrichtung mehrere Fehlermodelle herangezogen werden,

- in Abhängigkeit von mindestens einer definierten Auswahlnorm eines der mehreren Fehlermodelle ausgewählt wird,

- das ausgewählte Fehlermodell zur Ermittlung der geschätzten Navigationssignal-Fehlerinformationen auf die empfangenen Navigationssignale angewendet wird und

- die ermittelten Fehlerinformationen an das Funk-Navigationssystem und/oder Teilnehmer-Endgeräte übertragen werden.

Werden die Fehlerinformationen zunächst an das Funk-Navigationssystem und nicht direkt an die Teilnehmer-Endgeräte übertragen, so können geeignete Instanzen des Funk-Navigationssystems die Übertragung der Fehlerinformationen an die Teilnehmer-Endgeräte in an sich bekannter Weise übernehmen.

Die Erfindung hat den Vorteil, dass statt einer starren Wahl eines Fehlermodells eine flexible oder gar dynamische Wahl von Fehlermodellen erfolgt. Die Wahl des Fehlermodells kann entweder zu bestimmten Zeitpunkten oder periodisch, also zeitereignis-gesteuert erfolgen, sie kann aber auch gesteuert durch bestimmte tatsächliche Ereignisse oder Signalisierungen erfolgen.

Durch die erfindungsgemäße Wahl der Fehlermodelle wird garantiert, dass das geeignetste Fehlermodell ausgewählt wird und zusätzlich zur Fehlerschätzung der Navigationssignale bevorzugt auch der Fehler der jeweiligen Fehlerschätzung geschätzt und entsprechend berücksichtigt werden kann. Weiterhin kann durch die Auswahl des geeigneten Fehlermodells auch mit einer geringeren Zahl von Empfangseinrichtungen eine ausreichende Genauigkeit des Verfahrens erreicht werden und andererseits ein Fehlermodell ausgewählt werden kann, dass für einen möglichst großen Bereich eines Empfangsgebietes für Navigationssignale möglichst geringe Fehler garantiert.

Das Verfahren kann insbesondere so ausgelegt werden, dass die Fehlermodelle eine erste Anzahl von allen Fehlermodellen gemeinsamen Fehlerkomponenten aufweisen und eine zweite Anzahl von individuellen Fehlerkomponenten aufweisen, die für jedes Fehlermodell individuell definiert sind. Damit unterscheiden sich die Fehlermodelle bevorzugt nicht in allen Fehlerkomponenten, sondern lediglich in einigen Komponenten, die alternativ gewählt werden können, wohingegen andere Fehler komponenten gleich bleiben. Beispiele für solche Fehlerkomponenten sind die bereits eingangs genannten Fehler in Nord- bzw. Ostrichtung und der Uhr- oder Höhenfehler.

Es kann dieses Verfahren auch derart weitergebildet sein, dass sich die individuellen Fehlerkomponenten als Linearkombinationen von definierten Basis-Fehlerkomponenten ergeben. Es können also neben den bisher gebräuchlichen, eingangs genannten reinen Fehlerkomponenten also auch gemischte Fehlerkomponenten vorgesehen werden, die sich aus Basis-Fehlerkomponenten ergeben. Solche Basis-Fehlerkomponenten können die bisher gebräuchlichen, eingangs genannten reinen Fehlerkomponenten sein. Es kann also beispielsweise eine gemischte räumlich-zeitliche Fehlerkomponente aus den bisher gebräuchlichen, eingangs genannten reinen Fehlerkomponenten gebildet werden. Deshalb kann vorgesehen werden, dass die Basis-Fehlerkomponenten mindestens eine räumliche Fehlerkomponente und mindestens eine zeitliche Fehlerkomponente umfassen. Hierdurch kann die Variationsmöglichkeit des Verfahrens und damit letztlich die Genauigkeit weiter optimiert werden.

Als definierte Auswahlnorm prinzipiell jede geeignete Norm herangezogen werden, die eine Ermittlung des Fehlermodells in der gewünschten Weise erlaubt.

Als definierte Auswahlnorm kann beispielsweise die Varianz der geschätzten Navigationssignal-Fehlerinformationen auf einem Referenzgitter in einem definierten Empfangsgebiet herangezogen werden. Es kann aber auch als definierte Auswahlnorm die Summe der Beträge oder der Quadrate der geschätzten Navigationssignal-Fehlerinformationen an den Orten der Empfangseinrichtungen herangezogen werden. Eine weitere Alternative ist, dass als definierte Auswahlnorm das Maximum der Beträge oder der Quadrate der geschätzten Navigationssignal-Fehlerinformationen an den Orten der Empfangseinrichtungen herangezogen wird. Aber es kann auch als definierte Auswahlnorm das Integral über den Betrag oder die Quadrate der geschätzten Navigationssignal-Fehlerinformationen im definierten Empfangsgebiet herangezogen werden. Schließlich kann auch alternativ als definierte Norm das Maximum der Beträge oder der Quadrate der geschätzten Navigationssignal-Fehlerinformationen im definierten Empfangsgebiet herangezogen werden.

Die hier genannten Auswahlnormen stellen einige geeignete Beispiele für geeignete Auswahlnormen dar, es ist diese Aufzählung jedoch nicht abschließend, so dass im Sinne der vorliegenden Erfindung auch andere Auswahlnormen gewählt werden können.

Um einen weiteren Freiheitsgrad bei der Optimierung der Fehlerinformationen zu erzielen, kann vorgesehen werden, dass die geschätzten Navigationssignal-Fehlerinformationen örtlich und/oder zeitlich gewichtet werden. So kann beispielsweise vorgesehen werden, dass die geschätzten Navigationssignal-Fehlerinformationen abhängig von der Dichte der Teilnehmer-Endgeräte im Empfangsgebiet gewichtet werden. Die Gewichtung kann aber auch in Abhängigkeit von anderen Faktoren erfolgen.

Ein weiterer Gegenstand der vorliegenden Erfindung ist eine Auswerte-Einrichtung zur Auswertung von Navigationssignalen eines Funk-Navigationssystems. Gemäß der Erfindung weist die Auswerte-Einrichtung folgendes auf:

- einen Fehlermodell-Speicher zur Speicherung von Fehlermodellen für empfangene Navigationssignale des Funk-Navigationssystems,

- eine Verarbeitungs-Einrichtung ausgebildet zur Auswahl eines Fehlermodells in Abhängigkeit von einer definierten Auswahlnorm und zur Anwendung des ausgewählten Fehlermodells auf empfangene Navigationssignale und

- eine Einrichtung zur Übertragung von Navigationssignal-Fehlerinformationen an das Funk-Navigationssystem und/ oder Teilnehmer-Endgeräte.

Die entsprechenden Vorteile der Erfindung ergeben sich analog zu den bereits dargestellten Vorteilen des erfindungsgemäßen Verfahrens.

Wie bereits dargestellt sind verschiedene Arten der Ausbildung von Funk-Navigationssystemen möglich, entsprechend sind auch die Auswerte-Einrichtungen anzupassen. So kann beispielsweise die Auswerte-Einrichtung als Auswerte-Einrichtung mindestens eines Satelliten-Navigationssystems ausgebildet sein. Weiterhin kann die Auswerte-Einrichtung so ausgebildet sein, dass sie zur Durchführung von einzelnen oder mehreren der vorstehend genannten Verfahrensschritte angepasst ist.

Ein weiterer Gegenstand der vorliegenden Erfindung ist ein Computer-Programm zur Ermittlung von geschätzten Navigationssignal-Fehlerinformationen eines Funk-Navigationssystems, wobei das Computer-Programm für ein Zusammenwirken mit Einrichtungen einer vorgenannten Auswerte-Einrichtung ausgebildet ist und wobei das Computer-Programm weiterhin ausgebildet ist

- zum Steuern des Austesens mehrerer Fehlermodelle aus einem Fehlermodell-Speicher,

- zur Auswahl eines der mehreren Fehlermodelle in Abhängigkeit von mindestens einer definierten Auswahlnorm,

- zur Ermittlung der geschätzten Navigationssignal-Fehlerinformationen unter Anwendung des ausgewählten Fehlermodells auf die empfangenen Navigationssignale und

- zur Steuerung der Übertragung der ermittelten Fehlerinformationen an das Funk-Navigationssystem und/oder Teilnehmer-Endgeräte.

Ein letzter Gegenstand der vorliegenden Erfindung ist ein Computer-Programm-Produkt beinhaltend einen maschinenlesbaren Programmträger, auf dem ein vorstehend genanntes Computer-Programm in Form von elektronisch auslesbaren Steuersignalen gespeichert ist. Die Steuersignale können in jeder geeigneten Form gespeichert sein, die elektronische Auslesung kann dann entsprechend durch elektrische, magnetische, elektromagnetische, elektrooptische oder sonstige elektronische Verfahren erfolgen. Beispiele für solche Programmträger sind Magnetbänder, Disketten, Festplatten, CD-ROM oder Halbleiterbausteine.

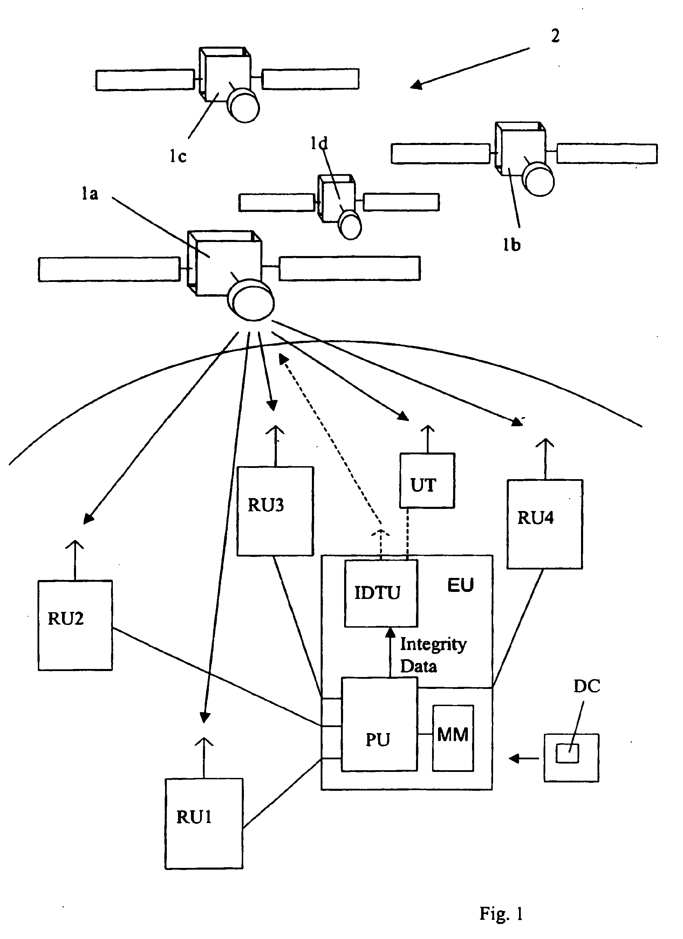

Nachfolgend wird anhand der Figur 1 ein spezielles Ausführungsbeispiel der vorliegenden Erfindung im Rahmen eines Satelliten-Navigationssystems erläutert.

Es zeigt:

Fig. 1:  Satelliten-Navigationssystem, Empfangseinrichtungen und Auswerte-Einrichtung zur Ermittlung von geschätzten Navigationssignal-Fehlerinformationen

Figur 1 zeigt ein Satelliten-Navigationssystem 2, welches aus mehreren Navigationssatelliten 1a, 1b, 1c, 1d besteht, die sich jeweils in einem entsprechenden Orbit um die Erde befinden. Diese Navigationssatelliten 1a, 1b, 1c, 1d senden Navigationssignale aus, welche auf der Erde von entsprechenden Empfängereinrichtungen empfangen werden können. Ein Beispiel für solche Empfängereinrichtungen sind Teilnehmer-Endgeräte (User Terminal) UT. In Figur 1 sind weitere Empfangseinrichtungen (Receiver Unit) RU1, RU2, RU3, RU4 dargestellt, die mit einer Auswerte-Einrichtung (Evaluation Unit) EU datentechnisch verbunden sind. Die Auswerte-Einrichtung EU weist einen Fehlermodel-Speicher (Error Model Memory) MM auf, in dem mehrere Fehlermodelle für empfangene Navigationssignale des Funk-Navigationssystems 2 gespeichert sind. Der Fehlermodel-Speicher MM ist datentechnisch mit einer Verarbeitungs-Einrichtung (Processing Unit) PU verbunden, welche ausgebildet ist zur Auswahl eines der im Fehlermodel-Speicher MM gespeicherten Fehlermodelle in Abhängigkeit von einer definierten Auswahlnorm und zur Anwendung des ausgewählten Fehlermodels auf Navigationssignale, welche mit Hilfe der Empfangseinrichtungen RU1, RU2, RU3, RU4 empfangen wurden und an die Verarbeitungs-Einrichtung PU weitergeleitet wurden. Die Verarbeitungs-Einrichtung PU erzeugt auf Basis des ausgewählten Fehlermodels und der empfangenen Navigationssignale geschätzte Navigationssignal-Fehlerinformationen in Form von Integritätsdaten (Integrity Data). Solche Integritätsdaten sind grundsätzlich aus dem Stand der Technik bekannt. Diese Integritätsdaten werden von der Auswerte-Einrichtung EU mit Hilfe einer entsprechenden Einrichtung (Integrity Data Transmission Unit) IDTU entweder direkt an Teilnehmer-Endgeräte UT übertragen oder an geeignete Einrichtungen des Satelliten-Navigationssystems 2 übertragen.

Die Auswerte-Einrichtung EU kann insbesondere mit Hilfe eines Computer-Programms zur Ermittlung von geschätzten Navigationssignal-Fehlerinformationen, also von Integritätsdaten, des Satelliten-Navigationssystems nach dem bereits beschriebenen Verfahren eingerichtet werden, wenn die sonstigen Hardware-Voraussetzungen in der Auswerte-Einrichtung EU gegeben sind. Das Computer-Programm ermöglicht dann insbesondere im Zusammenwirken mit der Verarbeitungs-Einrichtung PU, dem Fehlermodell-Speicher MM und der Übertragungseinrichtung IDTU die Steuerung des Auslesens und die Auswahl von Fehlermodellen aus dem Fehlermodell-Speicher MM, die Ermittlung der Integritätsdaten auf Basis des ausgewählten Fehlermodells und der empfangenen Navigationssignale sowie die Steuerung Übertragung der Integritätsdaten. Das Computer-Programm kann bevorzugt mit Hilfe eines Computer-Programm-Produktes in die Auswerte-Einrichtung EU eingebracht werden, wobei das Computer-Programm-Produkt einen maschinenlesbaren Programmträger (Data Carrier) DC beinhaltet, auf dem das Computer-Programm in Form von elektronisch auslesbaren Steuersignalen gespeichert ist. Beispiele wären eine Chipkarte oder ein ähnlicher Träger mit einem Halbleiterchip, in dem das Computerprogramm gespeichert ist oder eine CD-ROM. Es sind aber auch alle anderen geeigneten Arten von Computer-Programm-Produkten anwendbar.

Im folgenden soll ein Beispiel für die konkrete Ermittlung von geschätzten Navigationssignal-Fehlerinformationen dargestellt werden, die in einer Auswerte-Einrichtung erfolgt. Natürlich sind auch andere Ermittlungsverfahren denkbar, wie sich dem Fachmann ohne weiteres erschließt.

1. Ein erster Schritt umfasst die Wahl von Konfigurationsparametern alpha und gamma, beispielsweise (0,1),(1,0),(2,-1),(-1,2),(0.5,0.5) .... Diese Konfigurationsparameter dienen zur Bildung von Linearkombinationen von zwei möglichen Basis-Fehlerkomponenten, in diesem Fall einer räumlichen (radialen) und einer zeitlichen (Uhrfehler) Basis-Fehlerkomponente, für die dritte von drei Fehlerkomponenten. Es bleiben als zwei der drei Fehlerkomponenten gleich (räumlicher Fehler in Nordrichtung und Ostrichtung), dagegen wird eine dritte Fehlerkomponente durch geeignete Linearkombination von zwei Basis-Fehlerkomponenten gebildet und im Verfahren modifiziert.

2. In einem zweiten Schritt wird eine Design-Matrix erstellt. Hierzu werden folgende Ausgangsgrößen verwendet:

| xs,ys,zs | Nominale Position einer Navigationssignal-Sendeeinrichtung, also hier eines Satelliten, in ECEF-Koordinaten (earth centered, earth fixed), hier nur für eine Navigationssignal-Sendeeinrichtung |
|---|---|
| xr,yr,zr | Positionen von Empfangseinrichtungen in ECEF-Koordinaten, Enthalten in einem Vektor der Länge m |
| alpha, gamma | Konfigurationsparameter |

Es werden nun folgende Berechnungen durchgeführt:

$$dx = xs\text{-}xr;$$

$$dy = ys\text{-}yr;$$

$$dz = zs\text{-}zr;$$

$$cx = ys\text{*}zr\text{-}zs\text{*}yr;$$

$$cy = zs\text{*}xr\text{-}xs\text{*}zr;$$

$$cz = xs\text{*}yr\text{-}ys\text{*}xr;$$

$$ps = sqrt(\ xs.\text{*}xs + ys.\text{*}ys\ );$$

$$Rs = sqrt( xs.*xs + ys.*ys + zs.*zs );$$

$$dR = sqrt( dx.*dx + dy.*dy + dz.*dz );$$

$$East = cz ./(ps*dR);$$

$$North = (xs.*cy-ys.*cx\qquad)./(ps*Rs*dR);$$

$$Up = (xs.*dx+ys.*dy+zs.*dz)./(\quad Rs*dR);$$

Als Ergebnis bildet man eine Design-Matrix X, in der die oben berechneten Größen wie folgt zusammengefasst werden:

$$X = [ East, North, alpha.*ones(size(East))+gamma.*Up ];$$

Man erhält als Ergebnis dieses Berechnungsschrittes also:

| X | Design-Matrix der Größe (m,3) |
|---|---|

3. In einem dritten Schritt erfolgt die Schätzung von drei Fehlerkomponenten der Navigationssignal-Fehlerinformationen auf Basis der ermittelten Positionen. Hierzu werden folgende Ausgangsgrößen verwendet:

| X | Design-Matrix der Größe (m,3) |
|---|---|
| P | Gewichtung der Messungen für verschiedene Empfangseinrichtungen in Form einer Diagonalmatix der Größe (m,m) |
| y | Positionsmessungen für die verschiedenen Empfänger, enthalten in einem Vector der Länge m |

Dieser dritte Schritt stellt ein Least Square-Verfahren dar. Es werden folgende Berechnungen durchgeführt:

$$G = Cholesky\ factorisierung\ (P);$$

$$X = G * X;$$

$$y = G * y;$$

$$varCov = inv(X.'*X);$$

$$beta = varCov * X.' * y;$$

$$e = X * beta - y;$$

$$n = length(y);$$

$$u = length(beta);$$

$$sigma2 = e.' * e / (n-u);$$

$$varCov = sigma2 .* varCov;$$

Man erhält als Ergebnis dieses Berechnungsschrittes:

| beta | Vektor mit dem geschätzten Fehler in Ostrichtung (East), in Nordrichtung (North) und einer weiteren geschätzten Fehlerkompontene für die entsprechende Navigationssignal-Sendeeinrichtung, also den entsprechenden Satelliten |
|---|---|
| varCov | Varianz-Kovarianz-Matrix für die geschätzten Komponenten in beta |

4. Es wird dann erneut die Design-Matrix aus Schritt 2 berechnet, aber dabei werden nun die Positionen der Empfangseinrichtungen durch Positionen ersetzt, für die geschätzte Navigationssignal-Fehlerinformationen ermittelt werden sollen, beispielsweise für ein Referenzgitter in dem definierten Empfangsgebiet.

5. Es werden dann geschätzte Navigationssignal-Fehlerinformationen e_err und die entsprechende Standardabweichung e_sig dieser Navigationssignal-Fehlerinformationen berechnet gemäß

$$e\_err = beta'*X$$

$$e\_sig = sqrt(dot(X,varCov*X))$$

6. Nun wird beispielsweise das Maximum von e_err auf dem Referenzgitter für die oben gewählte Kombination von alpha und gamma ermittelt.

7. Dann wird das Minimum von e_err und einem Wert e_err_min ermittelt und in e_err_min gespeichert. Wird dieser Schritt zum ersten mal durchgeführt, so wird e_err_min zunächst gleich e_err gesetzt.

8. Es wird nun eine neue Kombination von Konfigurationsparametern alpha und gamma gewählt und erneut der Schritt 2 durchgeführt oder die Prozedur beendet, wenn alle vorgegebenen Kombination von Konfigurationsparametern alpha und gamma einmal verwendet wurden.

9. e_err_min ergibt sich dann als maximaler geschätzter Navigationssignal-Fehler. Das entsprechende Fehlermodell mit drei Fehlerkomponenten ergibt sich aus dem Nord-Fehler, dem Ost-Fehler und der Linearkombination der Basis-Fehlerkomponenten basierend auf der Kombination der Konfigurationsparameter alpha und gamma, die zu dem entsprechenden Wert von e_err = e_err_min gehört.

**Patentansprüche**

1. Verfahren zur Ermittlung von geschätzten Navigationssignal-Fehlerinformationen, und zur deren Übertragung an Teilnehmer-Endgeräte (UT) eines Funk-Navigationssystems (2), wobei mehrere Empfangseinrichtungen (RU1, RU2, RU3, RU4) Navigationssignale mindestens einer Navigationssignal-Sendeeinrichtung empfangen und mindestens eine Auswerte-Einrichtung (EU) die empfangenen Navigationssignale auswertet, **dadurch gekennzeich-**

**net, dass**

- von der Auswerte-Einrichtung (EU) mehrere Fehlermodelle herangezogen werden,
- in Abhängigkeit von mindestens einer definierten Auswahlnorm eines der mehreren Fehlermodelle ausgewählt wird,
- das ausgewählte Fehlermodell zur Ermittlung der geschätzten Navigationssignal-Fehlerinformationen auf die empfangenen Navigationssignale angewendet wird und
- die ermittelten Fehlerinformationen an das Funk-Navigationssystem (2) und/oder Teilnehmer-Endgeräte (UT) übertragen werden.

2. Verfahren nach Anspruch 1, **dadurch gekennzeichnet, dass** die Fehlermodelle eine erste Anzahl von allen Fehlermodellen gemeinsamen Fehlerkomponenten aufweisen und eine zweite Anzahl von individuellen Fehlerkomponenten aufweisen, die für jedes Fehlermodell individuell definiert sind.

3. Verfahren nach Anspruch 2, **dadurch gekennzeichnet, dass** sich die individuellen Fehlerkomponenten als Linearkombinationen von definierten Basis-Fehlerkomponenten ergeben.

4. Verfahren nach Anspruch 3, **dadurch gekennzeichnet, dass** die Basis-Fehlerkomponenten mindestens eine räumliche Fehlerkomponente und mindestens eine zeitliche Fehlerkomponente umfassen..

5. Verfahren nach einem der Ansprüche 1 bis 4, **dadurch gekennzeichnet, dass** als definierte Auswahlnorm die Varianz der geschätzten Navigationssignal-Fehlerinformationen auf einem Referenzgitter in einem definierten Empfangsgebiet herangezogen wird.

6. Verfahren nach einem der Ansprüche 1 bis 4, **dadurch gekennzeichnet, dass** als definierte Auswahlnorm die Summe der Beträge oder der Quadrate der geschätzten Navigationssignal-Fehlerinformationen an den Orten der Empfangseinrichtungen (RU1, RU2, RU3, RU4) herangezogen werden.

7. Verfahren nach einem der Ansprüche 1 bis 4, **dadurch gekennzeichnet, dass** als definierte Auswahlnorm das Maximum der Beträge oder der Quadrate der geschätzten Navigationssignal-Fehlerinformationen an den Orten der Empfangseinrichtungen (RU1, RU2, RU3, RU4) herangezogen wird.

8. Verfahren nach einem der Ansprüche 1 bis 4, **dadurch gekennzeichnet, dass** als definierte Auswahlnorm das Integral über den Betrag oder die Quadrate der geschätzten Navigationssignal-Fehlerinformationen im definierten Empfangsgebiet herangezogen wird.

9. Verfahren nach einem der Ansprüche 1 bis 4, **dadurch gekennzeichnet, dass** als definierte Norm das Maximum der Beträge oder der Quadrate der geschätzten Navigationssignal-Fehlerinformationen im definierten Empfangsgebiet herangezogen wird.

10. Verfahren nach einem der Ansprüche 1 bis 9, **dadurch gekennzeichnet, dass** die geschätzten Navigationssignal-Fehlerinformationen örtlich und/oder zeitlich gewichtet werden.

11. Verfahren nach Anspruch 10, **dadurch gekennzeichnet, dass** die geschätzten Navigationssignal-Fehlerinformationen abhängig von der Dichte der Teilnehmer-Endgeräte (UT) im Empfangsgebiet gewichtet werden.

12. Auswerte-Einrichtung (EU) zur Auswertung von Navigationssignalen eines Funk-Navigationssystems (2), aufweisend

- einen Fehlermodell-Speicher (MM) zur Speicherung von Fehlermodellen für empfangene Navigationssignale des Funk-Navigationssystems (2),
- eine Verarbeitungs-Einrichtung (PU) ausgebildet zur Auswahl eines Fehlermodells in Abhängigkeit von einer definierten Auswahlnorm und zur Anwendung des ausgewählten Fehlermodells auf empfangene Navigationssignale und
- eine Einrichtung (IDTU) zur Übertragung von Navigationssignal-Fehlerinformationen an das Funk-Navigationssystem (2) und/oder Teilnehmer-Endgeräte (UT).

13. Auswerte-Einrichtung nach Anspruch 12, **dadurch gekennzeichnet, dass** die Auswerte-Einrichtung (EU) als Auswerte-Einrichtung mindestens eines Satelliten-Navigationssystems (2) ausgebildet ist.

14. Auswerte-Einrichtung nach Anspruch 12 oder 13, ausgebildet zur Durchführung eines Verfahrens nach einem der Ansprüche 5 bis 11.

15. Computer-Programm zur Ermittlung von geschätzten Navigationssignal-Fehlerinformationen eines Funk-Navigationssystems (2), wobei das Computer-Programm für ein Zusammenwirken mit Einrichtungen (PU, MM, IDTU) einer Auswerte-Einrichtung (EU) nach einem der Ansprüche 12 bis 14 ausgebildet ist und wobei das Computer-Programm weiterhin ausgebildet ist

- zum Steuern des Auslesens mehrerer Fehlermodelle aus einem Fehlermodell-Speicher (MM),
- zur Auswahl eines der mehreren Fehlermodelle in Abhängigkeit von mindestens einer definierten Auswahlnorm,
- zur Ermittlung der geschätzten Navigationssignal-Fehlerinformationen unter Anwendung des ausgewählten Fehlermodells auf die empfangenen Navigationssignale und
- zur Steuerung der Übertragung der ermittelten Fehlerinformationen an das Funk-Navigationssystem (2) und/ oder Teilnehmer-Endgeräte (UT).

16. Computer-Programm-Produkt beinhaltend einen maschinenlesbaren Programmträger (DC), auf dem ein Computer-Programm nach Anspruch 15 in Form von elektronisch auslesbaren Steuersignalen gespeichert ist.

**Claims**

1. A method of determining estimated navigation signal error information, and of transmitting it to user terminals (UT) of a radio navigation system (2), multiple receiver units (RU1, RU2, RU3, RU4) receiving navigation signals of at least one navigation signal transmission unit, and at least one evaluation unit (EU) evaluating the received navigation signals, **characterized in that**

- the evaluation unit (EU) uses multiple error models,
- depending on at least one defined selection standard, one of the multiple error models is selected,
- the selected error model is applied to the received navigation signals to determine the estimated navigation signal error information, and
- the determined error information is transmitted to the radio navigation system (2) and/or user terminals (UT).

2. A method according to claim 1, **characterized in that** the error models have a first number of error components which are common to all error models, and a second number of individual error components which are defined individually for each error model.

3. A method according to claim 2, **characterized in that** the individual error components are given as linear combinations of defined basic error components.

4. A method according to claim 3, **characterized in that** the basic error components have at least one spatial error component and at least one temporal error component.

5. A method according to one of claims 1 to 4, **characterized in that**, as the defined selection standard, the variance of the estimated navigation signal error information on a reference grid in a defined reception area is used.

6. A method according to one of claims 1 to 4, **characterized in that**, as the defined selection standard, the sum of the absolute values or of the squares of the estimated navigation signal error information at the locations of the receiver units (RU1, RU2, RU3, RU4) is used.

7. A method according to one of claims 1 to 4, **characterized in that**, as the defined selection standard, the maximum of the absolute values or of the squares of the estimated navigation signal error information at the locations of the receiver units (RU1, RU2, RU3, RU4) is used.

8. A method according to one of claims 1 to 4, **characterized in that**, as the defined selection standard, the integral over the absolute value or over the squares of the estimated navigation signal error information in the defined reception area is used.

9. A method according to one of claims 1 to 4, **characterized in that**, as the defined standard, the maximum of the absolute values or of the squares of the estimated navigation signal error information in the defined reception area is used.

10. A method according to one of claims 1 to 9, **characterized in that** the estimated navigation signal error information is weighted spatially and/or temporally.

11. A method according to claim 10, **characterized in that** the estimated navigation signal error information is weighted in dependence on the density of the user terminals (UT) in the reception area.

12. An evaluation unit (EU) for evaluating navigation signals of a radio navigation system (2), having

- an error model memory (MM) for storing error models for received navigation signals of the radio navigation system (2),
- a processing unit (PU) in a form for selection of an error model depending on a defined selection standard and for application of the selected error model to received navigation signals, and
- a unit (IDTU) for transmitting navigation signal error information to the radio navigation system (2) and/or user terminals (UT).

13. An evaluation unit according to claim 12, **characterized in that** the evaluation unit (EU) is in the form of an evaluation unit of at least one satellite navigation system (2).

14. An evaluation unit according to claim 12 or 13, in a form to carry out a method according to one of claims 5 to 11.

15. Computer program for determining estimated navigation signal error information of a radio navigation system (2), the computer program being in a form for co-operation with units (PU, MM, IDTU) of an evaluation unit (EU) according to one of claims 12 to 14, and the computer program also being in a form

- to control the readout of multiple error models from one error model memory (MM),
- to select one of the multiple error models depending on at least one defined selection standard,
- to determine the estimated navigation signal error information by applying the selected error model to the received navigation signals, and
- to control the transmission of the determined error information to the radio navigation system (2) and/or user terminals (UT).

16. A computer program product containing a machine-readable program carrier (DC), on which a computer program according to claim 15 is stored in the form of electronically readable control signals.

## Revendications

1. Procédé pour la détermination d'informations d'erreur estimées de signaux de navigation et leur transmission à des terminaux abonnés (UT) d'un système de radionavigation (2), selon lequel plusieurs dispositifs de réception (RU1, RU2, RU3, RU4) reçoivent des signaux de navigation d'au moins un dispositif d'émission de signaux de navigation et au moins un dispositif d'exploitation (EU) exploite les signaux de navigation reçus,
**caractérisé en ce que**

- le dispositif d'exploitation (EU) utilise plusieurs modèles d'erreur,
- on choisit l'un de ces modèles d'erreur en fonction d'au moins une norme de sélection définie,
- on applique le modèle d'erreur choisi pour déterminer les informations d'erreur estimées de signaux de navigation aux signaux de navigation reçus, et
- on transmet les informations d'erreur déterminées au système de radionavigation (2) et/ou aux terminaux abonnés (UT).

2. Procédé selon la revendication 1,
**caractérisé en ce que**

les modèles d'erreur présentent un premier nombre de composantes d'erreur communes à tous les modèles d'erreur et un deuxième nombre de composantes d'erreur individuelles, définies individuellement pour chaque modèle d'erreur.

3. Procédé selon la revendication 2,
**caractérisé en ce que**
les composantes d'erreur individuelles, en tant que combinaisons linéaires, découlent de composantes d'erreur de base définies.

4. Procédé selon la revendication 3,
**caractérisé en ce que**
les composantes d'erreur de base renferment au moins une composante d'erreur dans l'espace et au moins une composante d'erreur dans le temps.

5. Procédé selon l'une quelconque des revendications 1 à 4,
**caractérisé en ce que**
comme norme de sélection définie, on utilise la variance des informations d'erreur estimées de signaux de navigation sur une grille de référence dans une zone de réception définie.

6. Procédé selon l'une quelconque des revendications 1 à 4,
**caractérisé en ce que**
comme norme de sélection définie, on utilise la somme des valeurs ou des carrés des informations d'erreur estimées de signaux de navigation sur les lieux des dispositifs de réception (RU1, RU2, RU3, RU4).

7. Procédé selon l'une quelconque des revendications 1 à 4,
**caractérisé en ce que**
comme norme de sélection définie, on utilise le maximum des valeurs ou des carrés des informations d'erreur estimées de signaux de navigation sur les lieux des dispositifs de réception (RU1, RU2, RU3, RU4).

8. Procédé selon l'une quelconque des revendications 1 à 4,
**caractérisé en ce que**
comme norme de sélection définie, on utilise l'intégrale sur la valeur ou les carrés des informations d'erreur estimées de signaux de navigation dans la zone de réception définie.

9. Procédé selon l'une quelconque des revendications 1 à 4,
**caractérisé en ce que**
comme norme définie, on utilise le maximum des valeurs ou des carrés des informations d'erreur estimées des signaux de navigation dans la zone de réception définie.

10. Procédé selon l'une quelconque des revendications 1 à 9,
**caractérisé en ce qu'**
on pondère les informations d'erreur estimées de signaux de navigation localement et/ou dans le temps.

11. Procédé selon la revendication 10,
**caractérisé en ce qu'**
on pondère les informations d'erreur estimées de signaux de navigation en fonction de la densité des terminaux abonnés (UT) dans la zone de réception.

12. Dispositif d'exploitation (EU) pour analyser les signaux de navigation d'un système de radionavigation (2) présentant :

- une mémoire de modèles d'erreur (MM) pour enregistrer les modèles d'erreur pour des signaux de navigation reçus du système de radionavigation (2),
- un dispositif de traitement (PU) conçu pour sélectionner un modèle d'erreur en fonction d'une norme de sélection définie et pour appliquer le modèle d'erreur sélectionné à des signaux de navigation reçus, et
- un dispositif (IDTU) pour transmettre des informations d'erreur d'un signal de navigation au système de radionavigation (2) et/ou à des terminaux abonnés (UT).

13. Dispositif d'exploitation selon la revendication 12,

**caractérisé en ce qu'**

il (EU) est conçu sous forme de dispositif d'exploitation d'au moins un système de navigation par satellite (2).

14. Dispositif d'exploitation selon la revendication 12 ou la revendication 13, conçu pour réaliser un procédé selon l'une quelconque des revendications 5 à 11.

15. Programme informatique pour déterminer des informations d'erreur estimées de signaux de navigation d'un système de radionavigation (2), le programme informatique étant conçu pour coopérer avec des dispositifs (PU, MM, IDTU) d'un dispositif d'exploitation (EU) selon l'une quelconque des revendications 12 à 14 et le programme informatique étant en outre conçu pour :

- commander la lecture de plusieurs modèles d'erreur à partir d'une mémoire de modèles d'erreur (MM),
- sélectionner un modèle d'erreur parmi plusieurs en fonction d'au moins une norme de sélection définie,
- déterminer les informations d'erreur estimées de signaux de navigation en appliquant le modèle d'erreur sélectionné aux signaux de navigation reçus, et
- commander la transmission des informations d'erreur déterminées au système de radionavigation (2) et/ou aux terminaux abonnés (UT).

16. Programme informatique contenant un support de programme (DC) pouvant être lu par une machine, sur lequel un programme informatique selon la revendication 15 est enregistré sous forme de signaux de commande pouvant être lus par voie électronique.

Fig. 1